# EUROPEAN PATENT SPECIFICATION

(11) **EP 2 116 362 B1**
(45) Date of publication and mention of the grant of the patent: **23.10.2013**
(21) Application number: 08016299.3
(22) Date of filing: 16.09.2008
(51) Int. Cl.: B29D 30/16, B29D 30/30

(54) **3-dimensional strip winding system for special giant all-steel radial OTR tire**
Dreidimensionales Streifenwickelsystem für einen speziellen riesigen Edelstahl-Radial-OTR-Reifen
Système d'enroulement tridimensionnel d'une bande pour bandage OTR radial tout acier, géant et spécifique.

(30) Priority: 05.05.2008 CN 200810052989
(43) Date of publication of application: 11.11.2009
(73) Proprietor: TIANJIN SAIXIANG TECHNOLOGY CO., LTD., Huayuan Industry Zone Tianjin New Technology Industry Park (CN)
(72) Inventor: Zhang, Zhiquan, (Huanwai), Huayuan Industry Zone, Tianjin New Technology Industry Park (CN); Zhang, Jianhao, (Huanwai), Huayuan Industry Zone, Tianjin New Technology Industry Park (CN)
(74) Representative: Kramer - Barske - Schmidtchen

(56) References cited:
- EP-A- 1 647 394
- EP-A- 1 785 263
- FR-A- 1 426 617
- LU-A1- 87 565
- US-A- 3 549 442
- US-A- 4 222 810
- US-A- 4 240 863
- US-A- 5 395 475

## Description

### BACKGROUND OF THE INVENTION

Field of the Invention

The invention relates to a tread winding system for rubber tire machinery, and more particularly to a 3-dimensional strip winding system for a special giant all-steel radial OTR tire.

Description of the Related Art

Giant tires, and special giant all-steel OTR (Off The Road) tires are widely used. These tires have large diameter, wide cross section, thick tread, and different winding shape from that of general radial OTR tires. They also require higher winding and applying accuracy than general radial OTR tires. Therefore, traditional winding systems only applicable to general radial OTR tires cannot be used with special giant all-steel OTR tires.

FR 1 426 617 A discloses an apparatus for winding a strip in form of a tread of a tire on the green body of a tire. The apparatus comprises winding and applying device, a support and a pivoting device for adjusting the winding and applying device to different diameters of different tires.

LU 87565 A discloses a winding system arranged on a movable plate form for winding and applying a rubber strip material on a green body of a tire.

US 4,240,863 A discloses a control system for elastomeric extrusion and application apparatus including an extrusion rate measuring device, a drive for moving an article, a resolver in which the speed of the drive is adjusted to match a desire proportion between the rate of extrusion and the rate of the application.

EP 1 647 394 A discloses a method and apparatus for producing an article by winding a rubber strip on a supporting body in which the sending out roller can tell positively and negatively within an inclination angle of 0 to 45° with respect to a tilting reference line. Furthermore, the standing out roller is laterally moved by changing the inclination angle.

US 5,395,475 A discloses an apparatus for winding an arrow belt-shaped member in zigzag around a drum. The apparatus includes a support base and a reciprocative motion device for reciprocatively moving the support base substantially along an axis of the drum between both ends of a predetermined region to maintain the distance between the drum and the support base at a constant value.

EP 1 785 263 A1 discloses a device to apply a thin narrow rubber tape to a rotating object, which can be suitably utilized for making a rubber component of a pneumatic tire. The device comprises a conveyer belt, a let-off roller on which the conveyer belt runs and from which the rubber tape is let-off, a traverser, a radial shifter, and a tilter.

US 4,222,810 A discloses an apparatus for application of a band material onto the side of a circular body of the revolution such as a tire. The apparatus includes a rotatable carrier for the body means for rotating the body on the carrier and band application means adjacent to the carrier. The band application means includes means for supplying continues band material in form of a two layer band which is made of a first band of material for application to the side of the body and a protective foil covering a surface of the band. Furthermore, the band application means further includes means for cutting of the first band after application of the first band to the side of a body, guide means including a guide member and driven roller means for positively engaging the protective file. Furthermore, means for pressing the first band onto the side of the body comprises resilient roller which is freely rotatable.

US 3,549,442 A discloses a method of building tires, such as new off the road tires, on a drum arrangement whereby a strip of rubber is placed thereon as the drum continually rotates. The apparatus includes an application and sensing arm which guides the material onto the drum in a predetermined pattern in accordance with a straight line template. The application and sensing arm moves in a straight line across the surface of the building drum to build a tire contour in accordance with the template configuration. The apparatus is portable and may be removed from a building station when not required and thus used to serve a number of building stations.

### SUMMARY OF THE INVENTION

In view of the above-described problems, it is one objective of the invention to provide a 3-D strip winding system for special giant all-steel radial OTR tires, featuring high accuracy, flexible adaption to different winding shapes, and safe and easy operation.

To achieve the above objectives a 3-D strip winding system for a special giant all-steel radial OTR tire according to independent claim 1 is provided. Further developments are given in the dependent claims.

According to one aspect, the pivoting device comprises: a spin orbit of an external gear ring, a positioning and rotating inner race, a support plate, a servo motor, and a drive gear. The spin orbit of an external gear ring is fixed on the upper surface plane of the movable base plate. The positioning and rotating inner race is flexibly attached inside the spin orbit of the external gear ring. One end of the support plate is fixed to the positioning and rotating inner race. The drive servo motor is rigidly disposed on the support plate, whose output end is connected to the drive gear after passing through the support plate. The drive gear is engaged with the outer edge of the spin orbit for the external gear ring.

According to a further aspect, the winding and applying device comprises: a floating guide, an applying and stitching roller, a drive unit for the applying and stitching roller cylinder, a support for the applying and stitching roller, a non-return device, a cutter, an air discharging roller, and a tachometer device. All above-mentioned units are installed on a supported plate of the support. The drive unit for the applying and stitching roller cylinder is connected to a lower front portion of the floating guide. The support for the applying and stitching roller is fixed at the front end of the drive unit for the applying and stitching roller cylinder. The non-return device is flexibly connected to the upper end of the support. The applying and stitching roller is rotatably disposed at the lower end of the support. The cutter is connected to the bottom of the applying and stitching roller. The air discharging roller is disposed below the cutter. The tachometer device is fixedly disposed below the air discharging roller.

According to a further aspect, the tachometer device comprises: a tachometer roller, an encoder, a link, a cylinder bracket, a cylinder, a cylinder hinged support, a rail adapter, rails, and slide blocks. The tachometer roller is installed at the front end of the link. The encoder is fixed at the side of the tachometer roller. The cylinder bracket is fixedly connected to the link. The output end of the cylinder is hinged with the cylinder bracket, and the input end of the cylinder is flexibly connected to the hinged support. The rails are placed rigidly below the rail adapter. The slide blocks are disposed at a predetermined position on the rails and are fastened to the link.

Advantages of the invention include:

1) the tachometer device can detect in real time the line speed of carcass joint point by PLC control, making the line speed of carcass match that of strip transportation, thus improving the uniformity of applied strip on the built carcass and guarantee the precision requirements;

2) the non-return device is able to prevent effectively the rubber strip from moving back after winding and cutting;

3) the servo drive rollers for strip transportation can greatly reduce, at multiple spots, friction between the strip and the follow-up guide rollers during the long travel of strip transportation, decreasing the excessive stretch of strip during transportation and improving the quality of winding and applying.

### BRIEF DESCRIPTION OF THE DRAWINGS

Detailed description will be given below with reference to accompanying drawings, in which

FIG. **1** is a schematic diagram of a 3-D strip winding system for a special giant all-steel radial OTR tire according to one embodiment of the invention;

FIG. **2** is a front view of a pivoting device according to one embodiment of the invention as shown in FIG. **1****;**

FIG. **3** is a partial enlargement of a pivoting device according to one embodiment of the invention as shown in FIG **2****;**

FIG. **4** is a schematic diagram of a strip winding and applying device according to one embodiment of the invention;

FIG. **5** is an "A" direction side view according to one embodiment of the invention as shown in FIG. **4****;**

FIG. **6** is a bottom view of a tachometer device according to one embodiment of the invention; and

FIG. **7** is a schematic diagram of a strip transportation bracket according to one embodiment of the invention.

Legend: **1.** Movable base plate, **2.** Pivoting device, **2-1.** Spin orbit of an external gear ring, **2-2.** Positioning and rotating inner race, **2-3.** Supported plate of pivoting device, **2-4.** Drive gear, **2-5.** Servo motor, **3.** Support, **3-1.** Supported plate of the support, **4.** Winding and applying device, **4-1.** Floating guide, **4-2.** Drive unit for an applying and stitching roller cylinder, **4-3.** Support for an applying and stitching roller, **4-4.** non-return device, **4-5.** applying and stitching roller, **4-6.** Cutter, **4-7.** Air discharging roller, **4-8.** Tachometer device, **4-8-1.** Tachometer roller, **4-8-2.** Encoder, **4-8-3.** Link, **4-8-4.** Cylinder bracket, **4-8-5.** Cylinder, **4-8-6.** Cylinder hinged support, **4-8-7.** Rail adapter, **4-8-8.** Rails, **4-8-9.** Slide blocks, **5**. Bracket, **5-1.** Telescopic rod, **5-2.** Servo drive roller for strip transportation, **5-3.** Follow-up guide roller.

### DETAILED DESCRIPTION OF THE EMBODIMENTS

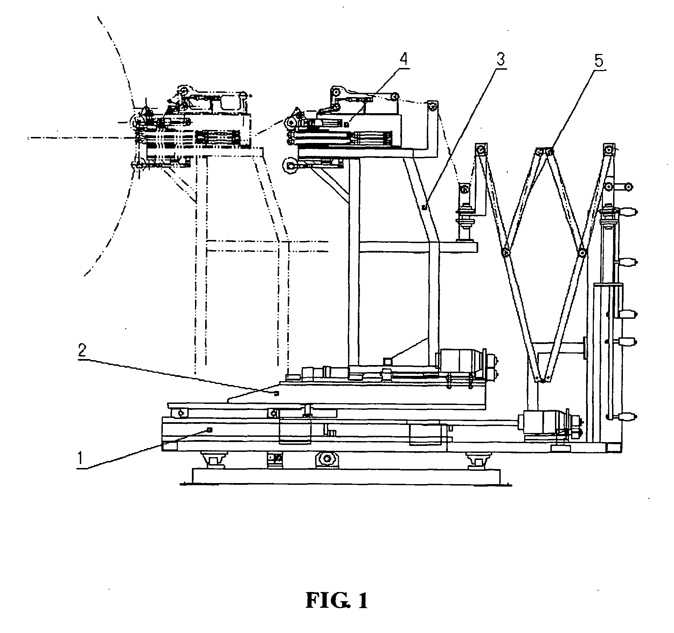

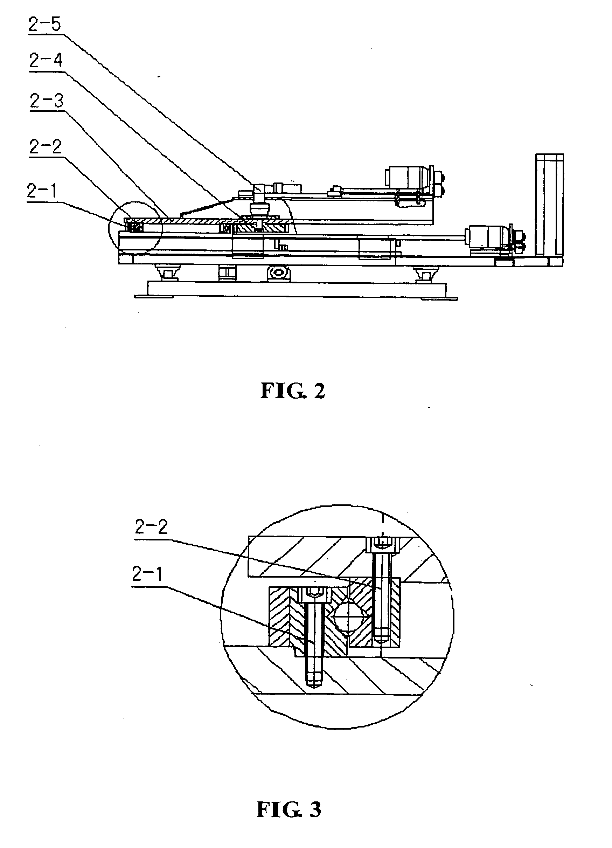

As shown in FIGS. **1-3****,** a 3-D strip winding system for a special giant all-steel radial OTR tire comprises a movable base plate **1,** a pivoting device **2,** a support **3,** a winding and applying device **4** and a bracket **5.** The winding and applying device **4** is fixed on the support **3.** The support **3** is flexibly connected to the pivoting device **2.** The pivoting device **2** is rotatably connected to the movable base plate **1.** The bracket **5** operates to minimize stretch of a rubber strip, whose output end is disposed on the support **3.** The pivoting device **2** comprises a spin orbit of an external gear ring **2-1,** a positioning and rotating inner race **2-2,** a support plate **2-3,** a servo motor **2-5** and drive gear **2-4.** The spin orbit of an external gear ring **2-1** is fixed on the plane of the movable base plate **1.** The positioning and rotating inner race 2-2 is flexibly attached inside the spin orbit of an external gear ring **2-1.** One end of the support plate **2-3** is fixed to the positioning and rotating inner race **2-2.** The drive servo motor **2-5** is rigidly disposed on the support plate **2-3,** whose output end is connected to the drive gear **2-4** after passing through the support plate. The drive gear **2-4** is engaged with the outer edge of the spin orbit of an external gear ring **2-1.**

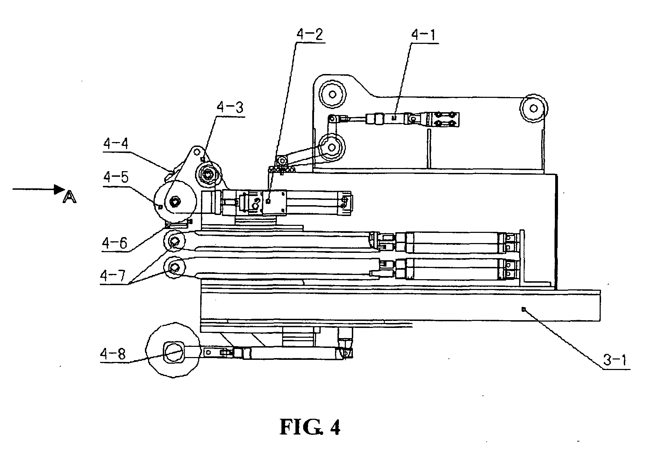

As shown in FIG. **4**, the winding and applying device **4** comprises: a floating guide **4-1,** an applying and stitching roller **4-5,** a drive unit for the applying and stitching roller cylinder **4-2,** a support for the applying and stitching roller **4-3,** a non-return device **4-4,** a cutter **4-6,** an air discharging roller **4-7,** and a tachometer device **4-8.** All above-mentioned units are installed on a supported plate of the support **3-1.** The drive unit for the applying and stitching roller cylinder **4-2** is connected to a lower front portion of the floating guide **4-1.** The support for the applying and stitching roller **4-3** is fixed at the front end of the drive unit for the applying and stitching roller cylinder **4-2.** In the embodiment, the support for the applying and stitching roller is substantially in a triangular shape. The non-return device **4-4** comprises a group of non-return rods, one end of which is a wedge shape, and the other end is flexibly connected to the upper end of the support for the applying and stitching roller **4-3.** The wedge-shaped end falls down naturally through gravity against the applying and stitching roller **4-5,** wherein the tip of the wedge shape touches the applying and stitching roller **4-5.** The applying and stitching roller **4-5** is rotatably disposed at the bottom of the support for an applying and stitching roller **4-3.** The cutter **4-6** is connected to the bottom of the applying and stitching roller **4-5.** The air discharging roller **4-7** is disposed below the cutter **4-6.** The tachometer device **4-8** is fixedly disposed below the air discharging roller **4-7.**

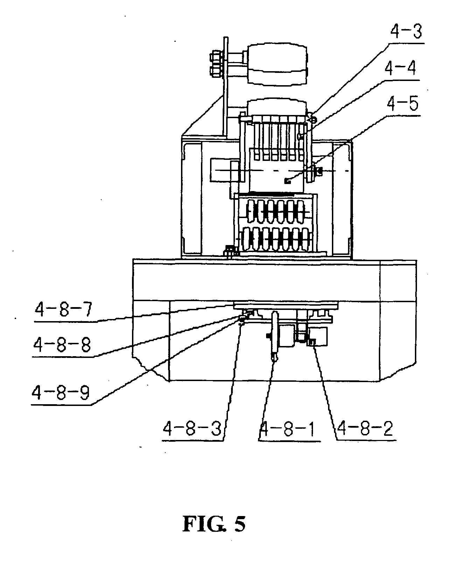

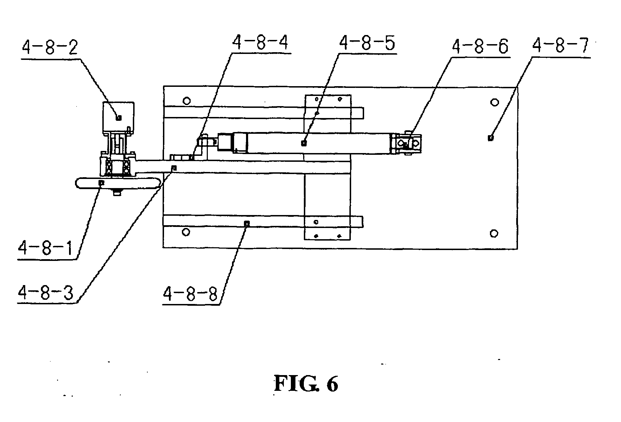

As shown is FIGS. **5** and **6****,** the tachometer device comprises: a tachometer roller **4-8-1,** an encoder **4-8-2,** a link **4-8-3,** a cylinder bracket **4-8-4,** a cylinder **4-8-5,** a cylinder hinged support **4-8-6,** rail adapters **4-8-7,** rails **4-8-8** and slide blocks **4-8-9.** The tachometer roller **4-8-1** is installed at front end of the link **4-8-3.** The encoder **4-8-2** is fixed at side of the tachometer roller **4-8-1.** The cylinder bracket **4-8-4** is fixedly connected to the link **4-8-3.** The output end of the cylinder **4-8-5** is hinged with the cylinder bracket **4-8-4,** and the input end of the cylinder **4-8-5** is flexibly connected to the hinged support **4-8-6.** The rails **4-8-8** are placed rigidly below the rail adapter **4-8-7.** The slide blocks **4-8-9** are disposed on a predetermined position of the rails **4-8-8** and are fastened to the link **4-8-3.**

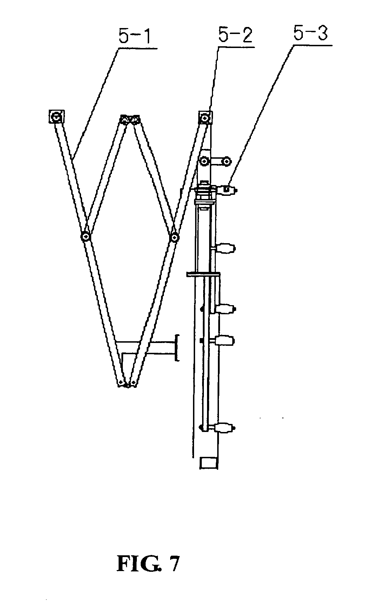

As shown in FIGS. **1** and **7****,** the bracket comprises: a group of telescopic rod for bracket **5-1,** a group of servo drive rollers for strip transportation **5-2,** a group of follow-up guide rollers **5-3.** The servo drive rollers for strip transportation **5-2** and the follow-up guide rollers **5-3** are installed at a proper position of telescopic rod **5-1** for bracket. The front end of the bracket **5** is connected to the support **3** and the back end to the movable base plate **1.**

The 3-D strip winding system for a special giant all-steel radial OTR tire of the invention operates as follows:

According to required size and winding shape of the green tire, adjust the transversal and longitudinal adjusting unit on the movable base plate to allow the winding and applying device to run in compliance with the tread profile. Then, adjust the pivoting device so as to meet the turning radian required between the sidewall and the crown. The rubber strip is fed onto the bracket by previous sequence, as per technical requirements. The strip has to be transported onto the winding and applying device after passing through the guide rollers on the bracket. By the help of the floating guide rollers, the strip is wound and applied, from applying and stitching roller, to the preset position of the green tire. The applying and stitching of the green tire is completed by the applying and stitching roller and the air discharging roller, which is used in conjunction with the movable base plate and the pivoting device to finish the winding and applying of the required shape for the green tire. During winding and applying, the tachometer device can detect in real time the rotational speed of the green tire so that the rotational speed of the green tire can be adjusted to match that of strip transportation. After winding and applying, the strip is cut by a cutter. Since the applied strip on the applying and stitching roller is also underneath the non-return device, it is possible to slightly insert a wedged-shape tip into the strip to push forward the strip; thus, the strip does not move back, which is convenient for next operation.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the scope of the invention.

## Claims

1. A 3-D strip winding system for a special giant all-steel radial OTR tire, comprising:
a pivoting device (2),
a support (3), and
a winding and applying device (4),
wherein
said winding and applying device (4) is fixed on said support (3), and
said support (3) is flexibly connected to said pivoting device (2),
the system further comprising
a movable base plate (1), and
a bracket (5) for minimizing stretch of a rubber strip"
wherein
said pivoting device (2) is rotatably connected to said movable base plate (1),
said bracket (5) comprises a group of telescopic rods (5-1), a group of servo drive rollers (5-2) for strip transportation, and a group of follow-up guide rollers (5-3),
said group of said servo drive rollers (5-2) for strip transportation and said group of said follow-up guide rollers (5-3) are installed on said telescopic rod (5-1), and
the front output end of said bracket (5) is connectedly disposed on said support (3) and the back end is connected to said movable base plate (1).

2. The 3-D strip winding system of claim 1, wherein
said pivoting device (2) comprises a spin orbit (2-1) for an external gear ring, a positioning and rotating inner race (2-2), a support plate (2-3), a servo motor (2-5), and a drive gear (2-4);
said spin orbit (2-1) for an external gear ring is fixed on the upper surface plane of said movable base plate (1);
said positioning and rotating inner race (2-2) is flexibly attached inside said spin orbit (2-1) for an external gear ring;
one end of said support plate (2-3) is fixedly connected to said positioning and rotating inner race (2-2);
said drive servo motor (2-5) is fixedly disposed on said support plate (2-3); an output shaft of said drive servo motor (2-5) passes through said support plate (2-3) and is fixedly connected to said drive gear (2-4); and
said drive gear (2-4) is engaged with an outer edge of said spin orbit (2-1) of an external gear ring.

3. The 3-D strip winding system of claim 1 or 2, wherein
said winding and applying device (4) comprises a floating guide (4-1), an applying and stitching roller (4-5), a drive unit (4-2) for the applying and stitching roller cylinder, a support (4-3) for the applying and stitching roller, a non-return device (4-4), a cutter (4-6), an air discharging roller (4-7), and a tachometer device (4-8), all connected to a supported plate (3-1) of the support (3);
said drive unit (4-2) for the applying and stitching roller cylinder is connected to a lower front portion of said floating guide (4-1);
said support (4-3) for the applying and stitching roller is fixedly connected to the front end of said drive unit (4-2) for the applying and stitching roller cylinder;
said non-return device (4-4) is flexibly connected to an upper end of said support (4-3);
said applying and stitching roller (4-5) is rotatably disposed at the bottom of said support (4-3);
said cutter (4-6) is connected to the bottom of said applying and stitching roller (4-5);
said air discharging roller (4-7) is disposed below said cutter (4-6); and said tachometer device (4-8) is fixedly disposed below said air discharging roller (4-7).

4. The 3-D strip winding system of claim 3, wherein
said tachometer device (4-8) comprises a tachometer roller (4-8-1), an encoder (4-8-2), a link (4-8-3), a cylinder bracket (4-8-4), a cylinder (4-8-5), a cylinder hinged support (4-8-6), a rail adapter (4-8-7), rails (4-8-8), and slide blocks (4-8-9);
said tachometer roller (4-8-1) is installed at the front end of said link (4-8-3);
said encoder (4-8-2) is fixed at the side of said tachometer roller (4-8-1);
said cylinder bracket (4-8-4) is connected to said link (4-8-3);
said output end of said cylinder (4-8-5) is hinged with said cylinder bracket (4-8-4);
said input end of said cylinder (4-8-5) is flexibly connected to said hinged support (4-8-6);
said rails (4-8-8) are placed rigidly below said rail adapter (4-8-7); and said slide blocks (4-8-9) are disposed at the predetermined position of said rails (4-8-8) and fastened to said link (4-8-3).

## Patentansprüche

1. 3-D Streifenaufwickelsystem für einen Spezial-Riesen-Vollstahl-Radial-OTR-Reifen, mit:
einer Schwenkvorrichtung (2),
einer Halterung (3), und
einer Aufwickel- und Aufbringvorrichtung (4), bei dem
die Aufwickel- und Aufbringvorrichtung (4) an der Halterung (3) befestigt ist, und
die Halterung (3) flexibel mit der Schwenkvorrichtung (2) verbunden ist,
wobei das System weiter aufweist
eine bewegliche Basisplatte (1), und
eine Winkelstütze (5) zum Minimieren einer Dehnung eines Gummistreifens,
wobei
die Schwenkvorrichtung (2) drehbar mit der beweglichen Basisplatte (1) verbunden ist,
die Winkelstütze (5) eine Gruppe von Teleskopstangen (5-1), eine Gruppe von Servoantriebswalzen (5-2) zum Transport von Streifen, und eine Gruppe von Folgeführungswalzen (5-3) aufweist,
die Gruppe von Servoantriebswalzen (5-2) zum Transport von Streifen und die Gruppe von Folgeführungswalzen (5-3) auf der Teleskopstange (5-1) installiert sind, und
das vordere Ausgangsende der Winkelstütze (5) verbunden auf der Halterung (3) angeordnet ist und das Hinterende mit der beweglichen Basisplatte (1) verbunden ist.

2. 3-D Streifenaufwickelsystem nach Anspruch 1, bei dem
die Schwenkvorrichtung (2) eine Drehbahn (2-1) für einen außenverzahnten Ring, einen positionierenden und sich drehenden Innenring (2-2), eine Abstützplatte (2-3), einen Servomotor (2-5) und ein Antriebsrad (2-4) aufweist,
die Drehbahn (2-1) für einen außenverzahnten Ring an der oberen Flächenebene der beweglichen Basisplatte (1) befestigt ist,
der positionierende und sich drehende Innenring (2-2) flexibel in der Drehbahn (2-1) für einen außenverzahnten Ring angebracht ist,
ein Ende der Abstützplatte (2-3) fest mit dem positionierenden und sich drehenden Innenring (2-2) verbunden ist,
der Antriebsservomotor (2-5) fest auf der Abstützplatte (2-3) angeordnet ist,
eine Ausgangswelle des Antriebsservomotors (2-5) durch die Abstützplatte (2-3) verläuft und starr mit dem Antriebsrad (2-4) verbunden ist, und
das Antriebsrad (2-4) im Eingriff mit einer Außenkante der Drehbahn (2-1) eines außenverzahnten Rings im Eingriff ist.

3. 3-D Streifenaufwickelsystem nach Anspruch 1 oder 2, bei dem
die Aufwickel- und Aufbringvorrichtung (4) eine Schwimmführung (4-1), eine Aufbring- und Niederrollwalze (4-5), eine Antriebseinheit (4-2) für den Aufbring- und Niederrollwalzenzylinder, eine Halterung (4-3) für die Aufbring- und Niederrollwalze, eine Rücklaufsperrvorrichtung (4-4), eine Trennvorrichtung (4-6), eine Luftausstoßwalze (4-7) und eine Tachometervorrichtung (4-8) aufweist, die alle mit einer abgestützten Platte (3-1) der Halterung (3) verbunden sind,
die Antriebseinheit (4-2) für den Aufbring- und Niederrollwalzenzylinder mit einem unteren Vorderbereich der Schwimmführung (4-1) verbunden ist,
die Halterung (4-3) für die Aufbring- und Niederrollwalze fest mit dem Vorderende der Antriebseinheit (4-2) für den Aufbring- und Niederrollwalzenzylinder verbunden ist,
die Rücklaufsperrvorrichtung (4-4) flexibel mit einem oberen Ende der Halterung (4-3) verbunden ist,
die Aufbring- und Niederrollwalze (4-5) drehbar auf dem Boden der Halterung (4-3) angeordnet ist,
die Trennvorrichtung (4-6) mit dem Boden der Aufbring- und Niederrollwalze (4-5) verbunden ist,
die Luftausstoßwalze (4-7) unter der Trennvorrichtung (4-6) angeordnet ist, und
die Tachometervorrichtung (4-8) fest unter der Luftausstoßwalze (4-7) angeordnet ist.

4. 3-D Streifenaufwickelystem nach Anspruch 3, bei dem
die Tachometervorrichtung (4-8) eine Tachometerwalze (4-8-1), einen Encoder (4-8-2), ein Verbindungsstück (4-8-3), einen Zylinderbeschlag (4-8-4), einen Zylinder (4-8-5), eine Zylindereinhänghalterung (4-8-6), einen Schienenadapter (4-8-7), Schienen (4-8-8) und Gleitblöcke (4-8-9) aufweist,
die Tachometerwalze (4-8-1) an dem vorderen Ende des Verbindungsstücks (4-8-3) installiert ist,
der Encoder (4-8-3) an der Seite der Tachometerwalze (4-8-1) angebracht ist,
der Zylinderbeschlag (4-8-4) mit dem Verbindungsstück (4-8-3) verbunden ist,
ein Ausgangsende des Zylinders (4-8-5) in den Zylinderbeschlag (4-8-4) eingehängt ist, das Eingangsende des Zylinders (4-8-5) flexibel mit der Einhänghalterung (4-8-6) verbunden ist,
die Schienen (4-8-8) starr unter dem Schienenadapter (4-8-7) angeordnet sind, und die Gleitblöcke (4-8-9) an der vorbestimmten Position der Schienen (4-8-8) angeordnet und an dem Verbindungsstück (4-8-3) angebracht sind.

## Revendications

1. Système d'enroulement de bande 3D pour un pneumatique OTR radial tout acier géant et spécifique, comprenant :
un dispositif pivotant (2),
un support (3), et
un dispositif d'enroulement et d'application (4),
dans lequel
ledit dispositif d'enroulement et d'application (4) est fixé sur ledit support (3), et
ledit support (3) est relié de manière flexible audit dispositif pivotant (2),
le système comprenant en outre
une plaque de base (1) mobile, et
un bras (5) pour réduire au minimum l'étirement d'une bande de caoutchouc,
dans lequel
ledit dispositif de pivotement (2) est relié de manière rotative à ladite plaque de base (1) mobile,
ledit bras (5) comprend un groupe de barres télescopiques (5-1), un groupe de rouleaux à servocommande (5-2) pour le transport de bande, et un groupe de rouleaux de guidage suiveurs (5-3),
ledit groupe de rouleaux à servocommande (5-2) pour le transport de bande et ledit groupe de rouleaux de guidage suiveurs (5-3) sont installés sur ladite barre télescopique (5-1), et
l'extrémité de sortie avant de dudit bras (5) est disposée sur ledit support (3) et y est reliée et l'extrémité arrière est reliée à ladite plaque de base (1) mobile.

2. Système d'enroulement de bande 3D selon la revendication 1, dans lequel
ledit dispositif pivotant (2) comprend une orbite de rotation (2-1) pour une couronne dentée extérieure, une bague de roulement intérieure (2-2) de positionnement et de rotation, une plaque de support (2-3), un servomoteur (2-5) et un engrenage d'entraînement (2-4) ;
ladite orbite de rotation (2-1) pour une couronne dentée extérieure est fixée sur le plan de surface supérieure de ladite plaque de base (1) mobile ;
ladite bague de roulement intérieure (2-2) de positionnement et de rotation est fixée souplement à l'intérieur de ladite orbite de rotation (2-1) pour une couronne à dentée extérieure ;
une extrémité de ladite plaque de support (2-3) est reliée fixement à ladite bague de roulement intérieure (2-2) de positionnement et de rotation;
ledit servomoteur d'entraînement (2-5) est disposé fixement sur ladite plaque de support (2-3) ;
un arbre de sortie dudit servomoteur d'entraînement (2-5) passe à travers ladite plaque de support (2-3) et est relié fixement audit engrenage d'entraînement (2-4) ; et
ledit engrenage d'entraînement (2-4) est en prise avec un bord extérieur de ladite orbite de rotation (2-1) d'une couronne dentée extérieure.

3. Système d'enroulement de bande 3D selon la revendication 1 ou 2, dans lequel
ledit dispositif d'enroulement et d'application (4) comprend un guide flottant (4-1), un rouleau applicateur et piqueur (4-5), une unité d'entraînement (4-2) pour le cylindre de rouleau applicateur et piqueur, un support (4-3) pour le cylindre de rouleau applicateur et piqueur, un dispositif de non-retour (4-4), une lame (4-6), un rouleau déchargeur d'air (4-7) et un dispositif tachymétrique (4-8), tous reliés à une plaque supportée (3-1) du support (3) ;
ladite unité d'entraînement (4-2) pour le cylindre de rouleau applicateur et piqueur est reliée à une partie frontale inférieure dudit guide flottant (4-1) ;
ledit support (4-3) pour le rouleau applicateur et piqueur est relié fixement à l'extrémité avant de ladite unité d'entraînement (4-2) pour le cylindre de rouleau applicateur et piqueur ;
ledit dispositif de non-retour (4-4) est relié souplement à une extrémité supérieure dudit support (4-3) ;
ledit rouleau applicateur et piqueur (4-5) est disposé de manière rotative au bas dudit support (4-3) ;
ladite lame (4-6) est reliée au bas dudit rouleau applicateur et piqueur (4-5) ;
ledit rouleau déchargeur d'air (4-7) est disposé en dessous de ladite lame (4-6) ; et
ledit dispositif tachymétrique (4-8) est disposé fixement en dessous dudit rouleau déchargeur d'air (4-7).

4. Système d'enroulement de bande 3D selon la revendication 3, dans lequel
ledit dispositif tachymétrique (4-8) comprend un rouleau tachymétrique (4-8-1), un codeur (4-8-2), un lien (4-8-3), une console de cylindre (4-8-4), un cylindre (4-8-5), un support articulé de cylindre (4-8-6), un adaptateur de rail (4-8-7), des rails (4-8-8) et des patins de glissement (4-8-9) ;
ledit rouleau tachymétrique (4-8-1) est installé à l'extrémité avant dudit lien (4-8-3) ;
ledit codeur (4-8-2) est fixé au côté dudit rouleau tachymétrique (4-8-1) ;
ladite console de cylindre (4-8-4) est reliée audit lien (4-8-3) ; ladite extrémité de sortie dudit cylindre (4-8-5) est articulée à ladite console de cylindre (4-8-4) ;
ladite extrémité d'entrée dudit cylindre (4-8-5) est reliée souplement audit support articulé (4-8-6) ;
lesdits rails (4-8-8) sont placés de manière rigide en dessous dudit adaptateur de rail (4-8-7) ; et
lesdits patins de glissement (4-8-9) sont disposés dans la position prédéterminée desdits rails (4-8-8) et fixés audit lien (4-8-3).
